# EUROPÄISCHE PATENTANMELDUNG

(11) **EP 2 263 849 A2**
(43) Veröffentlichungstag der Anmeldung: **22.12.2010**
(21) Anmeldenummer: 10166246.8
(22) Anmeldetag: 17.06.2010
(51) Int. Cl.: B29C 44/08, B29C 44/34

(54) **Verfahren und Anlage zur Herstellung von Vorgeformten Isolierkörpern**

(30) Priorität: 18.06.2009 AT 9402009
(71) Anmelder: Lambda One Isoliertechnik GmbH, 4551 Ried Im Traunkreis (AT)
(72) Erfinder: Schwaiger, Meinhard, 4040, Linz (AT); Politsch, Dieter, 4552, Wartberg/Krems (AT)
(74) Vertreter: Babeluk, Michael

(57) **Zusammenfassung**

Die Erfindung betrifft ein Verfahren und eine Anlage zur Herstellung von vorgeformten Isolierkörpern, wie sie beispielsweise zur thermischen Isolierung von Behältern für Warmwasserspeicher, Kaltwasserspeicher oder Rohrleitungen Verwendung finden, die eine verbesserte Isolierwirkung bei geringem Gewicht aufweisen. Weiters betrifft die Erfindung ein so hergestelltes Isolierelement.

## Beschreibung

Die Erfindung betrifft ein Verfahren und eine Anlage zur Herstellung von vorgeformten Isolierkörpern, wie sie beispielsweise zur thermischen Isolierung von Behältern für Warmwasserspeicher, Kaltwasserspeicher oder Rohrleitungen Verwendung finden, die eine verbesserte Isolierwirkung bei geringem Gewicht aufwiesen.

Derartige thermische Isolierungen werden beispielsweise für Heißwasserbehälter verwendet und sind u.A. aus der Fachliteratur bekannt. Dazu zählen beispielsweise die EP 1 860 384 A, die ein mehrteiliges Isolationssystem beschreibt, das jedoch aus festen Elementen mit unveränderbaren Systemabmessungen besteht und nur bedingt auf geometrische Abweichungen infolge Toleranzen der Behälter angewendet werden kann. Dies hat zur Folge, dass mittels der aus festen Abmessungen bestehenden Isolationselemente ein Vielfaches der Elementabmessungen den Umfang des zu isolierenden Behälters umschreibt. Daraus resultierende Differenzen fertigungsbedingter Toleranzen der Einzelsystemelemente und des zu isolierenden Behälters/Rohres führen zu unvermeidbaren Luftspalten zwischen dem geschlossenen Isoliermantel und dem zu isolierenden Behälter/Rohr; diese Luftspalte können zur Ausbildung von Luftzirkulationen führen und damit zu einer enormen Verringerung der Isolationswirkung. Ähnliche Nachteile weisen auch die Elemente gemäß DE 195 10 820, FR 25 77 009, US 4,640,437 und EP 0 117 388 A auf.

Aufgabe der gegenständlichen Erfindung ist es, ein ökonomisches Fertigungsverfahren für ein Isoliersystem, bestehend aus vorgeformten festen Elementen mit einer festen Außenschale, einer hochwirksamen Isolierschicht und einer elastischen Innenschicht, zur Verfügung zu stellen.

Erfindungsgemäß ist vorgesehen, dass die Isolierelemente in einer Form mit einer Außenschicht und einer Isolierschicht in einstückiger Form hergestellt werden.

Das dazu erforderliche Isoliersystem besteht aus festen vorgeformten kompakten Isolierelementen, die aus einer festen Außenfolie mit integrierten Verschlussleisten und in optimaler Ausbildung aus einer höherfesten dünnen ersten Isolierschicht, einer zweiten Isolierhartschaumschicht mit sehr niedriger Raumdichte bei hoher Isolierwirkung und einer dritten Isolierschicht aus elastischem Material bestehen. Aus diesen vorgeformten Isolierelementen werden durch Zusammenfügen benachbarter Elemente mittels der Verschlussleisten kompakte Isolierungen gebildet, mit einer elastischen Isolierschicht im Innenbereich, mit der die üblicherweise vorhandenen fertigungsbedingten Toleranzen und die infolge Wärmeausdehnung entstehenden Längenänderungen ausgeglichen werden können.

Die Herstellung derartiger Isolierelemente wird erfindungsgemäß dadurch gelöst, dass mit einem speziellen Manipulator in die offene Form nach Einlegen der Außenfolie, die mit den Verschlussleisten und versehen ist, in die konkave Unterform die erste Hartschaumschicht als dünne Lage aufgespritzt und auf die Innenseite des Deckels der geöffneten Form die elastische Weichschaumschicht aufgespritzt wird, die nach dem Aufschäumvorgang ca. 10 mm Schichtstärke erreicht, weiters auf die Hartschaumschicht dann im geschlossenen Zustand der Form der eigentliche Isolierschaum injiziert wird, der bei geschlossener Form unter Anlegen eines leichten Vakuums auf eine gewünschte Schichtstärke von ca. 25 mm bis 150 mm aufschäumt und mit der Weichschaumschicht eine feste Verbindung eingeht.

Bekannte Verfahren gehen von einer expliziten Herstellung der einzelnen Lagen aus, was zu einer enormen Taktzeitverlängerung und Erhöhung der Anlagenkosten führen würde.

Die Erfindung wird nun anhand der Figuren 1 bis 4 näher beschrieben. Fig. 1 und Fig. 2 zeigen ein erfindungsgemäßes Isolierelement in axonometrischer Darstellung bzw. im Detail und Fig. 3 und Fig. 4 schematisch eine erfindungsgemäße Anlage zur Herstellung.

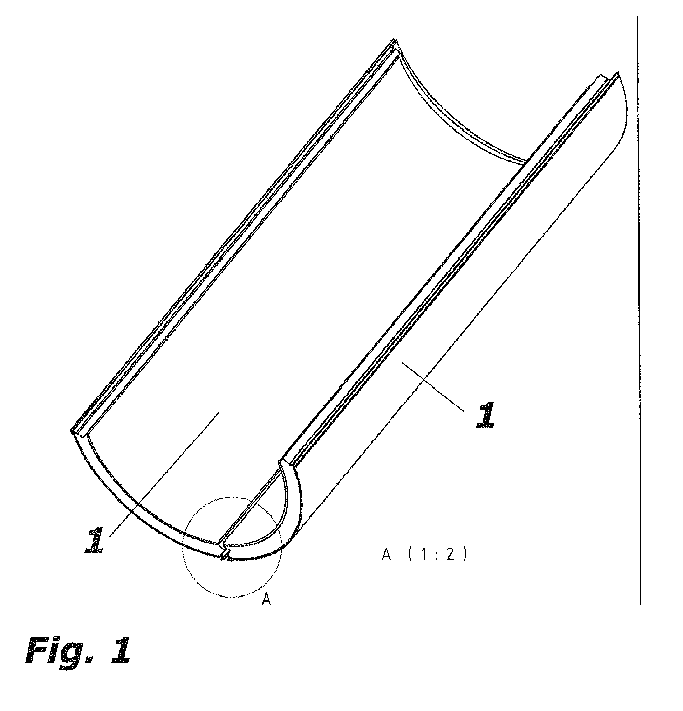

Fig. 1 zeigt eine Isolierung bestehend aus zwei festen vorgeformten Isolierelementen 1 im Montagzustand; eine vollständige Isolierung wird aus mehreren Isolierelementen 1 gebildet, wie z. B. drei Drittelelementen, vier Viertelelementen o.Ä..

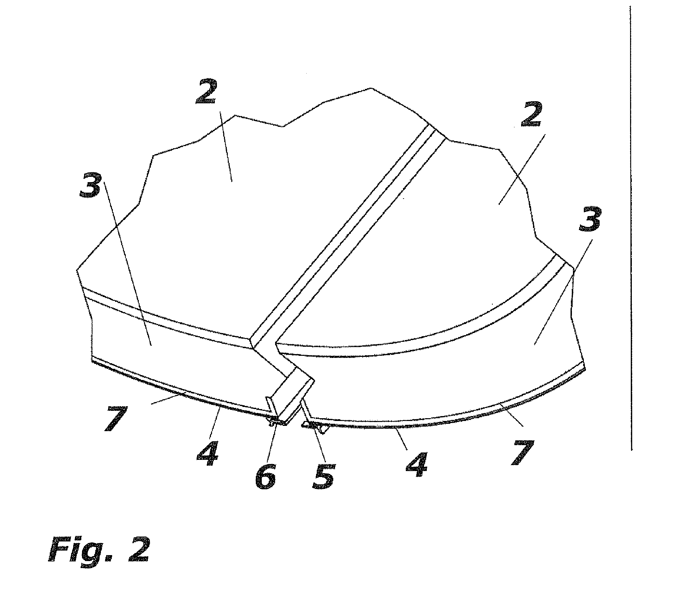

Fig. 2 zeigt das Detail A aus Fig. 1. Zwei benachbarte Isolierelemente 1 werden mittels der Verschlussleisten 5 und 6 zusammengefügt. Die Außenschicht 4 der Isolierelemente 1 besteht aus einer z.B. elastischen Folie, auf die eine wenige Millimeter dicke erste Isolierschicht 7 aus höherfestem Material aufgebracht wird, damit nach außen eine höhere (Druck-)Festigkeit erreicht werden kann. Diese erste Isolierschicht ist mit der zweiten eigentlichen Isolierschicht 3, aus hochisolierendem Material mit geringem Raumgewicht fest verbunden. Die dritte abschließende Deckschicht 2 im Innenbereich der Isolierung 1 besteht aus weichem, elastischem Isoliermaterial, vorzugsweise Weichschaum, und ist fest mit der Isolierschicht 3 verbunden.

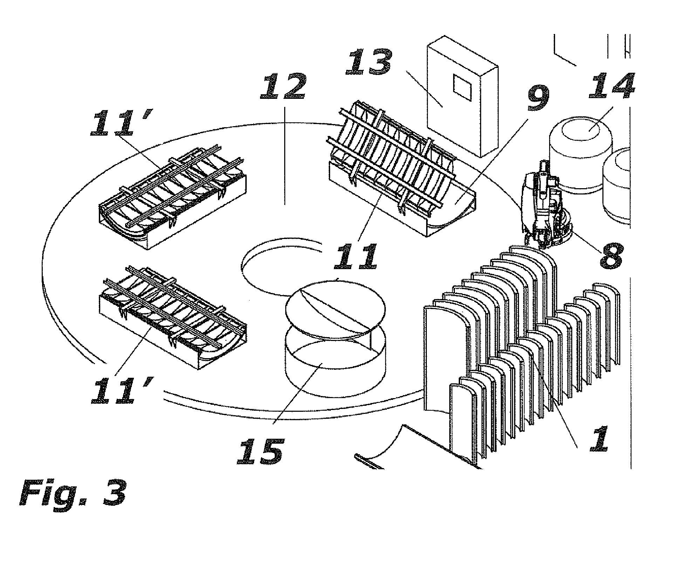

Fig. 3 zeigt eine Anlage zur Herstellung derartiger Isolierelemente 1; diese besteht aus dem Manipulator 8 mit den Schäumwerkzeugen, den Schäumformen 11, 11' für die Herstellung der Isolierelemente 1, der Verfahrvorrichtung 12, der Steuerung 13, den Behältern 14 für Polyol und Isocyanat und der Schäumform 15 für die Herstellung von nicht näher beschriebenen zusätzlichen Deckelelementen.

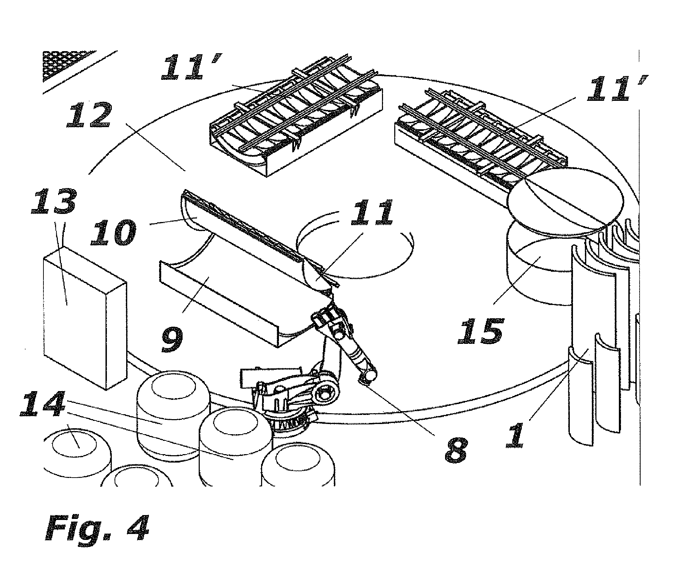

Fig. 4 zeigt dieselbe Anlage zur Herstellung derartiger Isolierelemente 1 und besteht aus dem Manipulator 8 mit den Schäumwerkzeugen, der Schäumform 11 im offenen Zustand, den Schäumformen 11' im geschlossenen Zustand, der Verfahrvorrichtung 12, der Steuerung 13, den Behältern 14 für Polyol und Isocyanat und der Schäumform 15 für die Deckelelemente. Der Manipulator 8 mit den Schäumwerkzeugen sprüht in einem ersten Arbeitsgang auf die Innenseite der Außenschicht 4, die in den Formenboden 9 eingelegt ist, die erste Lage Isolierschaum 7 aus höherfestem Material und auf die Innenseite des geöffneten Formendeckels 10 die dritte abschließende Deckschicht 2 der Isolierung aus elastischem, weichen Isolierschaum, der frei bis auf eine Schichtstärke von ca. 10 mm aufschäumt. Im geschlossenen Zustand der Form 11' wird die zweite eigentliche Isolierschicht 3 injiziert und anschließend unter Anlegen eines leichten Vakuums gegen die weiche Isolierschicht aufgeschäumt. Derart entstehen formstabile kompakte Isolierelemente 1 mit hoher Isolierwirkung und geringem Gewicht. Die Anlage wird mittels der Steuerung 13 gesteuert und die für die Verschäumung erforderlichen Komponenten sind in den Behältern 14 bevorratet.

## Patentansprüche

1. Verfahren zur Herstellung von Isolierelementen (1) zur thermischen Isolierung von Behältern, Rohren o.dgl., bei dem das Isolierelement in Dickenrichtung aus mehreren Schichten zusammengesetzt wird, durch einen Spritzvorgang unter Verwendung einer Form, die eine äußere Formhälfte und eine innere Formhälfte aufweist, **gekennzeichnet durch** folgende Schritte:
- Aufspritzen einer Hartschaumschicht (7) auf die äußere Formhälfte;
- Aufspritzen einer elastischen Weichschaumschicht (2) auf die innere Formhälfte;
- Einspritzen von Isolierschaum in einen Hohlraum zwischen der Hartschaumschicht (7) und der Weichschaumschicht, um nach dem Aufschäumen eine Isolierschicht (3) auszubilden und eine feste Verbindung von Hartschaumschicht (7), Isolierschicht (3) und Weichschaumschicht (2) herzustellen.

2. Verfahren nach Anspruch 1, **dadurch gekennzeichnet, dass** mindestens zwei unterschiedliche Schaumstrukturen gebildet werden.

3. Verfahren nach Anspruch 1 oder 2, **dadurch gekennzeichnet, dass** eine Außenschicht (4) direkt mit der Isolierschicht (3) verschäumt wird.

4. Verfahren nach Anspruch 3, **dadurch gekennzeichnet, dass** die abschließende Isolierschicht (2) direkt auf den Deckel (10) der geöffneten Form (11) aufgesprüht wird.

5. Verfahren nach einem der Ansprüche 1 bis 4, **dadurch gekennzeichnet, dass** die Aufschäumung der Isolierschicht (3) in der geschlossenen Form (11') erfolgt.

6. Verfahren nach einem der Ansprüche 1 bis 5, **dadurch gekennzeichnet, dass** für die Verschäumung mindestens einer Isolierschicht Polyurethan und/oder Recyclingpolyol verwendet wird.

7. Verfahren nach einem der Ansprüche 1 bis 6, **dadurch gekennzeichnet, dass** während der Verschäumung mindestens einer Isolierschicht in der geschlossenen Form (11') ein leichtes Vakuum, vorzugsweise zwischen 1% - 40% des Atmosphärendruckes erzeugt wird.

8. Isolierelement (1) zur thermischen Isolierung von Behältern, Rohren o.dgl., das in Dickenrichtung aus mehreren Schichten zusammengesetzt ist, **dadurch gekennzeichnet, dass** das Isolierelement (1) von außen nach innen eine Hartschaumschicht (7), eine Isolierschicht (3) und eine Weichschaumschicht (2) aufweist, die durch Verschäumen miteinander verbunden sind.

9. Isolierelement (1) nach Anspruch 8, **dadurch gekennzeichnet, dass** mindestens zwei unterschiedliche Schaumstrukturen vorgesehen sind.

10. Isolierelement (1) nach einem der Ansprüche 8 oder 9, **dadurch gekennzeichnet, dass** eine Außenschicht (4) direkt mit der Isolierschicht (3) verschäumt ist.
